# EUROPEAN PATENT SPECIFICATION

(11) **EP 3 079 953 B1**
(45) Date of publication and mention of the grant of the patent: **17.04.2019**
(21) Application number: 14869757.6
(22) Date of filing: 21.11.2014
(51) Int. Cl.: B60R 21/26, B60R 21/213, B60R 21/217, B60R 21/231, B60R 21/261, B60R 21/262

(54) **AIRBAG APPARATUS**
AIRBAG-VORRICHTUNG
DISPOSITIF AIRBAG

(30) Priority: 11.12.2013 KR 20130154206
(43) Date of publication of application: 19.10.2016
(73) Proprietor: Autoliv Development AB, 447 83 Vårgårda (SE)
(72) Inventor: BAE, Dae Won, Gunpo-si Gyeonggi-do 435-749 (KR); OH, Eun Hwan, Wonju-si Gangwon-do 220-726 (KR); LEE, Soon Bok, Yongin-si Gyeonggi-do 448-918 (KR); GWON, Tae Ik, Osan-si Gyeonggi-do 447-140 (KR)
(74) Representative: Feucker, Max Martin
(86) International application number: PCT/KR2014/011265
(87) International publication number: WO 2015/088161

(56) References cited:
- US-A1- 2004 066 021
- US-A1- 2007 284 862
- US-A1- 2011 316 263
- US-A1- 2011 316 264
- US-A1- 2012 298 438

## Description

### Technical Field

The present invention relates to an airbag apparatus having a heat shielding member capable of shielding an airbag from high-temperature gas generated from an inflator.

### Background Art

An airbag is an occupant restriction device inflated and developed upon the occurrence of an accident to protect an occupant. The airbag is provided in a vehicle to prevent the occupant from colliding with an instrument panel and a side portion of the vehicle.

Various types of airbags are provided according to the installation position or the use thereof. For example, a front airbag is installed at a steering wheel or an upper portion of an instrument panel to protect an occupant from a head-on collision of a vehicle. A side airbag is installed at the side of a door of a seat to protect an upper body of the occupant from side collision of the vehicle. A curtain-type airbag is installed at a roof side rail in a roof head trim to prevent a head of the occupant from colliding with a window upon the rollover of the vehicle.

The above airbags are usually folded in a smaller size within a limited installation range or received in a wounded state. In addition, in an urgent situation, the airbags are rapidly inflated and deployed toward a target area by using gas to protect an occupant.

For example, in the case of the curtain-type airbag installed in the roof side rail of the vehicle, gas generated from the inflator is supplied to the airbag. The airbag is deployed downwardly along the window by the gas rapidly supplied from the inflator to protect the head of the occupant.

An inflator injects a great amount of high-temperature and high-pressure gas by exploding a gas generating material charged in the inflator when an operating signal is transmitted as the impact sensor is operated. When the high-temperature and high-pressure gas directly makes contact with the airbag, the airbag may be melted or burst.

In order to solve the above problem, a heat shielding member is interposed between the airbag and the inflator to shield the high-temperature heat generated from the inflator.

An airbag apparatus according to the preamble of claim 1 is known from US 2007/0284862 A1.

### Disclosure of Invention

### Technical Problem

The present invention provides an airbag apparatus capable of improving the coupling between an inflator and a heat shielding member by improving the shape of the heat shielding member coupled with the inflator and the coupling structure between the inflator and the heat shielding member.

### Solution to Problem

In order to accomplish the above object, according to one aspect of the present invention, there is provided an airbag apparatus. The airbag apparatus includes an airbag having an airbag gas introduction part, an inflator having a cylindrical shape and a gas discharge end inserted into the airbag gas introduction part of the airbag, and a heat shielding member interposed between the inflator and the airbag to shield high-temperature gas generated from the inflator. The heat shielding member is configured to surround an outer circumference of the inflator and be fitted around the outer circumference of the inflator, and the heat shielding member is formed at a rear end portion thereof with a locking part inserted into a concave groove formed at a rear end portion of the inflator.

The heat shielding member may include a gas discharge end wrapping part having a cylindrical shape to wrap the side of the gas discharge end provided in the inflator, and an extension part extending to the rear end portion of the inflator from the gas discharge end wrapping part, in which the gas discharge end wrapping part and the extension part may have inner diameters smaller than an outer diameter of the inflator, and the gas discharge end wrapping part may include a slit formed in the longitudinal direction thereof.

The extension part may be provided at an end portion thereof with a locking step protruding inwardly thereof such that the locking step is inserted into the concave groove formed in the rear end portion of the inflator such that the locking step is locked with the concave groove.

The extension part may be configured to cover a part smaller than a semicircular part of an outer circumference of the inflator.

The gas discharge end wrapping part may be provided at a front end portion thereof with a stopper protruding toward a center of the gas discharge end wrapping part to prevent the inflator from being out of the gas discharge end wrapping part.

The heat shielding member may further include leg parts protruding to both sides of the extension part in a circumferential direction of the extension part at a rear end portion of the extension part.

The leg parts may extend in a form of a protrusion downwardly of a longitudinal central line of the inflator.

The extension part may be provided at the rear end portion thereof with a stepped end part bent toward a center of the heat shielding member.

The stepped end part may be locked with the concave groove of the inflator or may make contact with a rear end surface of the inflator to support the rear end surface of the inflator.

The extension part may include a hook part locked with the airbag gas introduction part.

The hook part may be formed at a central portion of the extension part in a radial direction of the extension part.

The heat shielding member may include a metallic material having hest resistance.

### Advantageous Effects of Invention

As described above, according to one embodiment of the present invention, the heat shielding member is strongly fitted around the outer circumference of the inflator, thereby simplifying the coupling structure with the inflator and improving the coupling force with the inflator.

According to one embodiment, the stopper is formed at the front end of the heat shielding member or the stepped end part is additionally formed at the rear end portion of the heat shielding member, so that the inflator is confined to a predetermined position in the heat shielding member, thereby improving the coupling property with the heat shielding member.

According to one embodiment, the hook part is formed at the center of the extension part provided in the heat shielding member to guide the insertion position of the heat shielding member coupled with the inflator into the airbag gas introduction part when the heat shielding member is inserted into the airbag gas introduction part, thereby facilitating the coupling work between the heat shielding member and the inflator.

### Brief Description of Drawings

FIG. 1 is a view showing the structure of an airbag apparatus according to one embodiment of the present invention;
FIG. 2 illustrates the structures of an inflator and a heat shielding member of the airbag apparatus according to one embodiment of the present invention;
FIG. 3 is a perspective view showing the coupling state between the heat shielding member and the inflator of FIG. 2;
FIG. 4 is a perspective view showing the structure of a heat shielding member of the airbag apparatus according to another embodiment of the present invention;
FIG. 5 is a partial perspective view showing the coupling state between the heat shielding member and the inflator according to still another embodiment of the present invention;
FIG. 6 is a perspective view showing the coupling state between the heat shielding member of FIG. 5 and an airbag cushion;
FIG. 7 is a partial perspective view showing the structure of a heat shielding member according to still another embodiment of the present invention;
FIG. 8 is an enlarged view showing a mark part VIII of FIG. 7;
FIG. 9 is a front view taken along an arrow XI of FIG. 7;
FIG. 10 is a partial perspective view showing the structure of a heat shielding member according to still yet another embodiment of the present invention;
FIG. 11 is a partial perspective view showing the coupling state between the heat shielding member of FIG. 10 and the inflator; and
FIG. 12 is a partial perspective view showing another example of the coupling state of the heat shielding member of FIG. 10 and the inflator.

### Mode for the Invention

Hereinafter, exemplary embodiments of the present invention will be described in detail with reference to accompanying drawings. However, the present invention is not limited to the following embodiments, but various modifications may be realized. The present embodiments are provided to make the disclosure of the present invention perfect and to make those skilled in the art perfectly comprehend the scope of the present invention.

The main feature of the present invention exists in a heat shielding member interposed between an inflator and an airbag of the airbag apparatus to shield high-temperature heat generated from the inflator, and the heat shielding member is applicable to various airbag apparatuses. Hereinafter, a curtain-type airbag installed in a roof side rail of a vehicle will be described as an example.

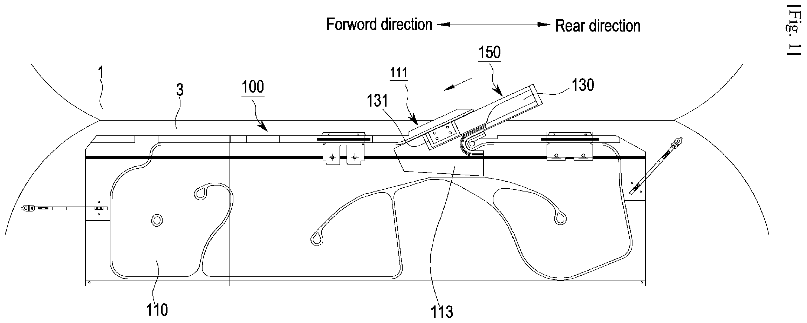

FIG. 1 is a view showing the structure of an airbag apparatus according to one embodiment of the present invention.

Referring to FIG. 1, a side curtain airbag apparatus 100 is installed in a folded state at a roof side rail 3 along upper edges of front and rear windows of a vehicle body 1.

The side curtain airbag apparatus 100 includes an airbag 110, an inflator 130, and a heat shielding member 150.

The airbag 110 is installed in a folded state along the roof side rail 3, and provided at an upper end portion thereof with an airbag gas introduction part 111. In FIG. 1, the airbag gas introduction part 111 of the airbag 110 is provided at a substantially central portion of the upper end portion of the airbag 110. However, the airbag gas introduction part 111 may be applied at various positions such as a front end portion or a rear end portion of the airbag 110.

The inflator 130 is coupled with the airbag gas introduction part 111 of the airbag 110 to generate high-temperature and high-pressure gas for airbag inflation. The gas discharge end 131 of the inflator 130 is inserted into the airbag gas introduction part 111 of the airbag 110.

The heat shielding member 150 is interposed between the inflator 130 and the airbag gas introduction part 111 of the airbag 110 to prevent the high-temperature heat generated from the inflator 130 from being directly transmitted to the airbag 110.

The airbag gas introduction part 111 may include a diffuser 113 (Y-SOCK) to guide gas supplied from the inflator 130 so that the gas from the inflator 130 is diffused to the front and rear portion of the airbag 110.

The inflator 130 and the heat shielding member 150 fitted around the outer circumference of the inflator 130 are inserted into an entrance part of the diffuser 113. The diffusion 113 guides the gas flow to the front and rear portions of the airbag 110 and protects the airbag 110 from the high-temperature gas.

The diffuser 113 may include a fabric the same as that of the airbag 110. The diffuser 113 may be multi-layered to improve the heat shielding property.

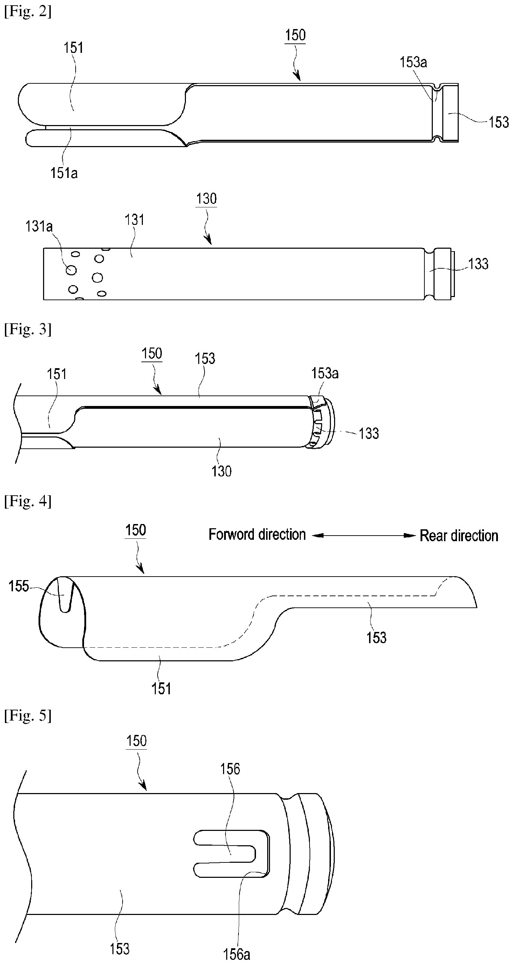

FIG. 2 illustrates the structures of an inflator and a heat shielding member of the airbag apparatus according to one embodiment of the present invention. FIG. 3 is a perspective view showing the coupling state between the heat shielding member and the inflator of FIG. 2.

Referring to FIG. 2, the inflator 130, which is formed in the shape of a cylinder, has the gas discharge end 131 inserted into the airbag gas introduction part (see FIG. 1) of the airbag.

The heat shielding member 150 is configured to surround the outer circumference of the inflator 130 and be fitted around the outer circumference of the inflator 130.

The heat shielding member 150 includes a gas discharge end wrapping part 151 having the shape of a cylinder while the substantially-entire portion of the gas discharge end 131 of the inflator 130 and an extension part 153 extending from a rear end portion of the gas discharge end wrapping part 151 to partially wrap a rear end portion of the inflator 130.

The gas discharge end wrapping part 151 and the extension part 153 have inner diameters slightly smaller than an outer diameter of the inflator 130 to be press-fitted around the outer circumference of the gas discharge end 131 of the inflator 130.

The gas discharge end wrapping part 151 may wrap at least a half of the outer circumference of the gas discharge end 131 of the inflator 130. The gas discharge end wrapping part 151 may have the shape of a cylinder to wrap the entire outer circumference of the gas discharge end 131. If the gas discharge end wrapping part 151 has the shape of a cylinder as described above, the gas discharge end wrapping part 151 has a slit 151a formed therein in a longitudinal direction of the gas discharge end wrapping part 151. The gas discharge end wrapping part 151 is moved elastically around the outer circumference of the gas discharge end 131, so that the gas discharge end wrapping part 151 can be easily fitted around the gas discharge end 131.

The extension part 153 covers less than a half of the outer circumference of the inflator 130. The extension part 153 may have the substantially C shape.

The inflator 130 is provided in a rear end portion thereof with a concave groove 133 having the substantially ring shape along the circumference of the rear end portion of the inflator 130. The extension part 153 is provided in a rear end portion thereof with a locking step 153a protruding inward of the extension part 153 so that the locking step 153a is inserted into the concave groove 133 and locked with the concave groove 133.

Through the above structure, the heat shielding member 150 can be securely coupled with the inflator 130 without being separated from the inflator 130.

FIG. 4 is a perspective view showing the structure of a heat shielding member according to another embodiment of the present invention.

Referring to FIG. 4, the heat shielding member 150 further includes a stopper 155 protruding toward the center of the gas discharge end wrapping part 151 at a front end portion of the gas discharge end wrapping part 151.

The above structure can prevent the inflator 130 from slipping toward the front end portion of the heat shielding member 150. The above structure may be more advantageously applied to the structure in which the inflator 130 is inclined with respect to the upper end portion of the airbag 110 at a predetermined angle as shown in FIG. 1.

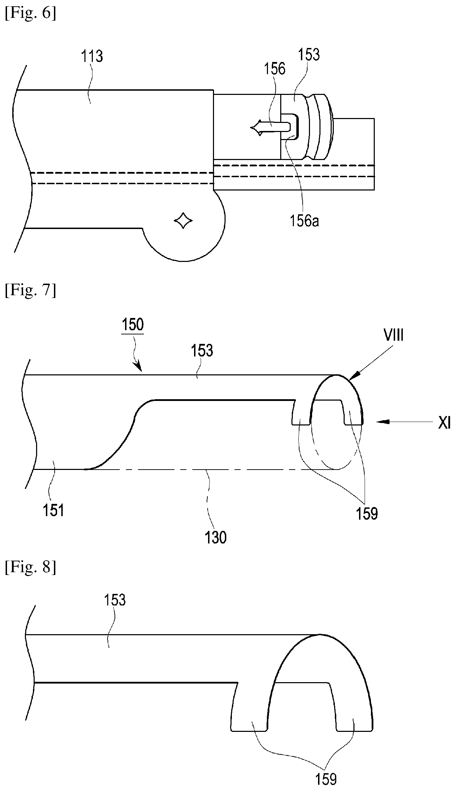

FIG. 5 is a partial perspective view showing the coupling state between the heat shielding member and the inflator according to still another embodiment of the present invention. FIG. 6 is a perspective view showing the coupling state between the heat shielding member of FIG. 5 and the airbag cushion.

Referring to FIG. 5, a hook part 156 is formed in the extension part 153 of the heat shielding member 150. The hook part 156 is limited by a groove 156a incised in a substantially inverse C shape from the extension part 153. In other words, one end portion of the hook part 156 is coupled integrally with the extension part 153.

The hook part 156 may be formed at the substantially central portion of the circumference of the extension part 153 so that both sides of the extension part 153 may symmetrical to each other about the hook part 156. The hook part 156 is formed at the substantially central portion of the circumference of the extension part 153 as described above, so that the usability of the heat shielding member 150 can be improved.

Referring to FIG. 1, the heat shielding member 150 coupled with the inflator 130 is inserted into the airbag 110 from the rear portion of the airbag 110 to the front portion of the airbag 110. However, the heat shielding member 150 may be inserted into the airbag 110 in a direction opposite to the insertion direction shown in FIG. 1. Since the hook part 156 is formed at the center of the extension part 153, the heat shielding member 150 may be used in common even if the insertion direction of the heat shielding member 150 is changed.

Referring to FIG. 6, the hook part 156 of the heat shielding member 150 is locked with the airbag gas introducing part 111 of the airbag 110, for example, an entrance part of the diffuser 113. When the heat shielding member 150 coupled with the inflator 130 is inserted into the entrance part of the diffuser 113, the hook part 156 serves as a guide. In other words, the hook part 156 performs an aligning function so that the heat shielding member 150 is inserted into a predetermined position of the airbag gas introduction part 111.

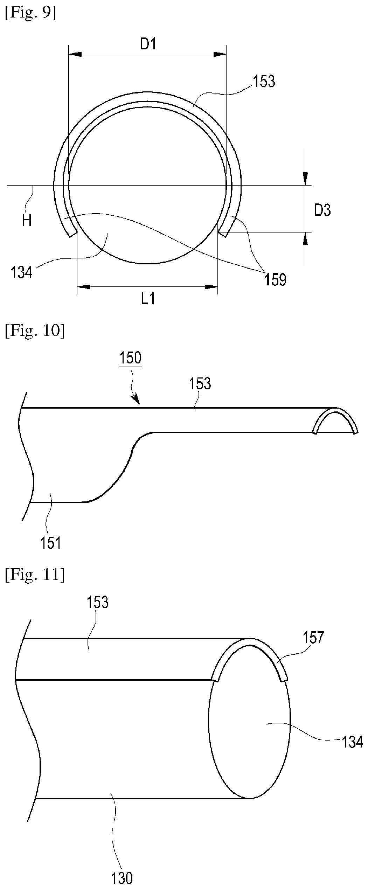

FIG. 7 is a partial perspective view showing the structure of a heat shielding member according to still another embodiment of the present invention. FIG. 8 is an enlarged view showing a mark part VIII of FIG. 7. FIG. 9 is a front view taken along an arrow XI of FIG. 7.

Referring to FIGS. 7 to 9, the extension part 153 of the heat shielding member 150 is additionally provided at a rear end portion thereof with leg parts 159 extending to both sides of the extension part 153 in a circumferential direction of the extension part 153.

Both end portions of the leg parts 159 extending in the circumferential direction of the extension part 153 extend more downwardly of a longitudinal central line H of the extension part 153.

Since a distance L between the leg parts 159 is smaller than the outer circumference of the inflator 130 through the above structure, the coupling strength between the inflator 130 and the heat shielding member 150 is increased. The shape of the leg part 159 has a substantially inverse U shape when viewed in a cross sectional view.

FIG. 10 is a partial perspective view showing the structure of a heat shielding member according to still yet another embodiment of the present invention.

Referring to FIG. 10, the extension part 153 of the heat shielding member 150 is provided at the rear end portion thereof with a stepped end part 157 bent toward the center of the extension part 153.

FIG. 11 is a partial perspective view showing the coupling state between the heat shielding member of FIG. 10 and the inflator.

Referring to FIG. 11, the stepped end part 157 of the heat shielding member 150 makes contact with a rear end surface 134 of the inflator 130.

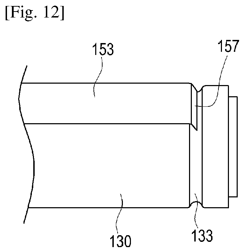

FIG. 12 is a partial perspective view showing another example of the coupling state of the heat shielding member of FIG. 10 and the inflator.

Referring to FIG. 12, the stepped end part 157 of the heat shielding member 150 is inserted into the concave groove 133 formed in an outer rear end portion of the inflator 130 and locked with the concave groove 133.

As described above, the stepped end part 157 of the heat shielding member 150 is aligned on the rear end surface 134 of the inflator 130 or in the concave groove 133 of the inflator 130, so that the inflator 130 is positioned in the heat shielding member 150.

The heat shielding member 150 described above may include a metallic material representing superior heat resistance.

Although the exemplary embodiments of the present invention have been described, it is understood that the exemplary embodiments help one ordinary skilled in the art to easily realize the present invention should not be limited to these exemplary embodiments and accompanying drawings.

## Claims

1. An airbag apparatus (100) comprising:
an airbag (110) having an airbag gas introduction part (111);
an inflator (130) having a cylindrical shape and a gas discharge end (171) inserted into the airbag gas introduction part (111) of the airbag (110); and
a heat shielding member (150) interposed between the inflator (130) and the airbag (110) to shield high-temperature gas generated from the inflator (130), wherein the heat shielding member (150) is configured to surround an outer circumference of the inflator (130) and be fitted around the outer circumference of the inflator (130), and
the heat shielding member (150) is formed at a rear end portion thereof with a locking part inserted into a concave groove (133) formed at a rear end portion of the inflator (130),
wherein the heat shielding member (150) comprises:
a gas discharge end wrapping part (151) to wrap at least a half of an outer circumference of the gas discharge end (131) provided in the inflator (130);
and an extension part (153) extending to the rear end portion of the inflator (130) from the gas discharge end wrapping part (151), **characterized in that** the gas discharge end wrapping part (151) and the extension part (153) have inner diameters smaller than an outer diameter of the inflator (130).

2. The airbag apparatus (100) of claim 1, wherein the gas discharge end wrapping part (151) has a cylinder shape and a slit (151a) formed therein in a longitudinal direction of the gas discharge end wrapping part (151).

3. The airbag apparatus of claim 1, wherein the locking part comprises a locking step (153a) protruding inwardly of an end portion of the extension part (153) such that the locking step (153a) is inserted into the concave groove (133) formed in the rear end portion of the inflator (130) such that the locking step (153a) is locked with the concave groove (133).

4. The airbag apparatus (100) of claim 1, wherein the extension part (153) is configured to cover a part smaller than a semicircular part of the inflator (130).

5. The airbag apparatus (100) of claim 1, wherein the gas discharge end wrapping part (151) is provided at a front end portion thereof with a stopper (155) protruding toward a center of the gas discharge end wrapping part (151) to prevent the inflator (130) from being out of the gas discharge end wrapping part (153).

6. The airbag apparatus (100) of claim 1, wherein the heat shielding member (150) further comprises leg parts (159) protruding to both sides of the extension part (153) in a circumferential direction of the extension part (153) at a rear end portion of the extension part (153).

7. The airbag apparatus (100) of claim 6, wherein the 1eg parts (159) extend in a form of a protrusion downwardly of a longitudinal central line of the inflator (130).

8. The airbag apparatus (100) of claim 1, wherein the heat shielding member (150) further comprises a stepped end part (157) bent toward a center of the heat shielding member (150) from a rear end portion of the extension part (153).

9. The airbag apparatus (100) of claim 8, wherein the stepped end part (157) is locked with the concave groove (133) of the inflator (130), or makes contact with a rear end surface (134) of the inflator (130) to support the rear end surface of the inflator (130).

10. The airbag apparatus (100) of claim 1, wherein the extension part (153) comprises a hook part (156) locked with the airbag gas introduction part (111).

11. The airbag apparatus (100) of claim 10, wherein the hook part (156) is formed at a central portion of the extension part (153) in a radial direction of the extension part (153).

12. The airbag apparatus (100) of claim 1, wherein the heat shielding member (150) comprises a metallic material having heatresistance.

## Patentansprüche

1. Airbageinrichtung (100), Folgendes umfassend:
einen Airbag (110) mit einem Airbag-Gaseinleitungsteil (111);
einen Gasgenerator (130) mit einer zylindrischen Form und einem Gasabführungsende (171), das in das Airbag-Gaseinleitungsteil (111) des Airbags (110) eingesetzt ist; und ein Wärmeabschirmungselement (150), das zwischen dem Gasgenerator (130) und dem Airbag (110) eingefügt ist, um von dem Gasgenerator (130) erzeugtes Hochtemperaturgas abzuschirmen, wobei das Wärmeabschirmungselement (150) konfiguriert ist, um einen Außenumfang des Gasgenerators (130) zu umgeben und um den Außenumfang des Gasgenerators (130) herum angebracht zu sein, und
wobei das Wärmeabschirmungselement (150) an einem hinteren Endabschnitt davon ausgebildet ist, wobei ein Verriegelungsteil in eine konkave Nut (133) eingesetzt ist, die an einem hinteren Endabschnitt des Gasgenerators (130) ausgebildet ist,
wobei das Wärmeabschirmungselement (150) Folgendes umfasst:
ein Umhüllungsteil (151) für das Gasabführungsende, zum Umhüllen wenigstens einer Hälfte eines Außenumfangs des Gasabführungsendes (131), das in dem Gasgenerator (130) bereitgestellt ist;
und ein Erweiterungsteil (153), das sich zu dem hinteren Endabschnitt des Gasgenerators (130) von dem Umhüllungsteil (151) für das Gasabführungsende erstreckt, **dadurch gekennzeichnet, dass** das Umhüllungsteil (151) für das Gasabführungsende und das Erweiterungsteil (153) kleinere Innendurchmesser als ein Außendurchmesser des Gasgenerators (130) aufweisen.

2. Airbageinrichtung (100) nach Anspruch 1, wobei das Umhüllungsteil (151) für das Gasabführungsende eine Zylinderform und einen darin ausgebildeten Schlitz (151a) in einer Längsrichtung des Umhüllungsteils (151) für das Gasabführungsende aufweist.

3. Airbageinrichtung nach Anspruch 1, wobei das Verriegelungsteil eine Verriegelungsstufe (153a) umfasst, die nach innen von einem Endabschnitt des Erweiterungsteils (153) derart vorsteht, dass die Verriegelungsstufe (153a) in die konkave Nut (133) eingesetzt ist, die in dem hinteren Endabschnitt des Gasgenerators (130) derart ausgebildet ist, dass die Verriegelungsstufe (153a) mit der konkaven Nut (133) verriegelt ist.

4. Airbageinrichtung (100) nach Anspruch 1, wobei das Erweiterungsteil (153) konfiguriert ist, um ein Teil abzudecken, das kleiner ist als ein halbkreisförmiges Teil des Gasgenerators (130).

5. Airbageinrichtung (100) nach Anspruch 1, wobei das Umhüllungsteil (151) für das Gasabführungsende an einem vorderen Endabschnitt davon mit einem Verschlussstück (155) bereitgestellt ist, das in Richtung einer Mitte des Umhüllungsteils (151) für das Gasabführungsende vorsteht, um zu verhindern, dass der Gasgenerator (130) aus dem Umhüllungsteil (153) für das Gasabführungsende austritt.

6. Airbageinrichtung (100) nach Anspruch 1, wobei das Wärmeabschirmungselement (150) ferner Beinteile (159) umfasst, die zu beiden Seiten des Erweiterungsteils (153) in einer Umfangsrichtung des Erweiterungsteils (153) an einem hinteren Endabschnitt des Erweiterungsteils (153) vorstehen.

7. Airbageinrichtung (100) nach Anspruch 6, wobei sich die Beinteile (159) in einer Form eines Überstands von einer Längsmittellinie des Gasgenerators (130) nach unten erstrecken.

8. Airbageinrichtung (100) nach Anspruch 1, wobei das Wärmeabschirmungselement (150) ferner ein abgestuftes Endteil (157) umfasst, das von einem hinteren Endabschnitt des Erweiterungsteils (153) in Richtung einer Mitte des Wärmeabschirmungselements (150) gebogen ist.

9. Airbageinrichtung (100) nach Anspruch 8, wobei das abgestufte Endteil (157) mit der konkaven Nut (133) des Gasgenerators (130) verriegelt ist oder mit einer hinteren Endoberfläche (134) des Gasgenerators (130) in Berührung ist, um die hintere Endoberfläche des Gasgenerators (130) zu stützen.

10. Airbageinrichtung (100) nach Anspruch 1, wobei das Erweiterungsteil (153) ein Hakenteil (156) umfasst, das mit dem Airbag-Gaseinleitungsteil (111) verriegelt ist.

11. Airbageinrichtung (100) nach Anspruch 10, wobei das Hakenteil (156) an einem zentralen Abschnitt des Erweiterungsteils (153) in einer radialen Richtung des Erweiterungsteils (153) ausgebildet ist.

12. Airbageinrichtung (100) nach Anspruch 1, wobei das Wärmeabschirmungselement (150) ein metallisches Material mit Wärmebeständigkeit umfasst.

## Revendications

1. Dispositif de coussin gonflable (100) comprenant :
un coussin gonflable (110) comportant une partie d'introduction de gaz de coussin gonflable (111) ;
un gonfleur (130) ayant une forme cylindrique et une extrémité d'évacuation de gaz (171) insérée dans la partie d'introduction de gaz de coussin gonflable (111) du coussin gonflable (110) ; et un élément de protection thermique (150) interposé entre le gonfleur (130) et le coussin gonflable (110) pour protéger le gaz à haute température généré par le gonfleur (130). Selon l'invention, l'élément de protection thermique (150) est configuré pour entourer une circonférence extérieure du gonfleur (130) et être ajusté autour de la circonférence extérieure du gonfleur (130), et
l'élément de protection thermique (150) est formé dans une partie d'extrémité arrière de celui-ci avec une pièce de verrouillage insérée dans une rainure concave (133) formée dans une partie d'extrémité arrière du gonfleur (130),
dans lequel l'élément de protection thermique (150) comprend :
une partie enveloppante de l'extrémité d'évacuation de gaz (151) pour envelopper au moins la moitié d'une circonférence extérieure de l'extrémité d'évacuation de gaz (131) prévue dans le gonfleur (130) ; et une partie d'extension (153) s'étendant vers la partie d'extrémité arrière du gonfleur (130) à partir de la partie enveloppante d'évacuation de gaz (151), **caractérisé en ce que** la partie enveloppante d'évacuation de gaz (151) et l'extension (153) ont des diamètres intérieurs inférieurs au diamètre extérieur du gonfleur (130).

2. Dispositif de coussin gonflable (100) selon la revendication 1, dans lequel la partie enveloppante d'extrémité d'évacuation de gaz (151) présente une forme cylindrique et une fente (151a) formée dans celle-ci dans une direction longitudinale de la partie enveloppante d'extrémité d'évacuation de gaz (151).

3. Dispositif de coussin gonflable selon la revendication 1, dans lequel la pièce de verrouillage comprend une étape de verrouillage (153a) faisant saillie vers l'intérieur d'une partie d'extrémité de la partie d'extension (153), de sorte que l'étape de verrouillage (153a) soit insérée dans la rainure concave (133) formée dans la partie d'extrémité arrière du gonfleur (130), de sorte que l'étape de verrouillage (153a) est verrouillée à l'aide de la rainure concave (133).

4. Dispositif de coussin gonflable (100) selon la revendication 1, dans lequel la partie d'extension (153) est configurée pour recouvrir une partie plus petite qu'une partie semi-circulaire du gonfleur (130).

5. Dispositif de coussin gonflable (100) selon la revendication 1, dans lequel la partie enveloppante d'extrémité d'évacuation de gaz (151) est prévue au niveau de la partie d'extrémité avant avec un bouchon (155) faisant saillie vers le centre de la partie enveloppante d'extrémité d'évacuation de gaz (151) pour empêcher le gonfleur (130) de sortir de la partie enveloppante d'extrémité d'évacuation de gaz (153).

6. Dispositif de coussin gonflable (100) selon la revendication 1, dans lequel l'élément de protection thermique (150) comprend en outre des montants (159) faisant saillie sur les deux côtés de la partie d'extension (153) dans une direction circonférentielle de la partie d'extension (153) dans la partie arrière de la partie d'extension (153).

7. Dispositif de coussin gonflable (100) selon la revendication 6, dans lequel les montants (159) s'étendent sous la forme d'une saillie vers le bas d'une ligne centrale longitudinale du gonfleur (130).

8. Dispositif de coussin gonflable (100) selon la revendication 1, dans lequel l'élément de protection thermique (150) comprend en outre une partie d'extrémité étagée (157) recourbée vers le centre de l'élément de protection thermique (150) à partir d'une partie d'extrémité arrière de la partie d'extension (153).

9. Dispositif de coussin gonflable (100) selon la revendication 8, dans lequel la partie d'extrémité étagée (157) est verrouillée à l'aide de la rainure concave (133) du gonfleur (130) ou entre en contact avec une surface d'extrémité arrière (134) du gonfleur (130) pour soutenir la surface d'extrémité arrière du gonfleur (130).

10. Dispositif de coussin gonflable (100) selon la revendication 1, dans lequel la partie d'extension (153) comprend une pièce à crochet (156) verrouillée par la partie d'introduction de gaz dans le coussin gonflable (111).

11. Dispositif de coussin gonflable (100) selon la revendication 10, dans lequel la pièce à crochet (156) est formée dans une partie centrale de la partie d'extension (153) dans une direction radiale de la partie d'extension (153).

12. Dispositif de coussin gonflable (100) selon la revendication 1, dans lequel l'élément de protection thermique (150) comprend un matériau métallique présentant une résistance thermique.
